# FASCICULE DE BREVET EUROPEEN

(11) **EP 3 776 295 B1**
(45) Date de publication et mention de la délivrance du brevet: **11.06.2025**
(21) Numéro de dépôt: 19718795.8
(22) Date de dépôt: 25.03.2019
(51) Int. Cl.: G06F 21/32, G06F 21/35, H04W 4/80, H04W 12/06

(54) **PROCÉDÉ ET DISPOSITIF D'AUTHENTIFICATION D'UN UTILISATEUR**
METHOD AND DEVICE FOR AUTHENTICATING A USER
VERFAHREN UND VORRICHTUNG ZUR AUTHENTIFIZIERUNG EINES BENUTZERS

(30) Priorité: 30.03.2018 FR 1852786
(43) Date de publication de la demande: 17.02.2021
(73) Titulaire: Orange, 92130 Issy-les-Moulineaux (FR)
(72) Inventeur: HUET, Romain, 92326 CHÂTILLON CEDEX (FR); LEPETIT, Olivier, 92326 CHÂTILLON CEDEX (FR)
(74) Mandataire: Vidon Brevets & Stratégie
(86) Numéro de dépôt international: PCT/FR2019/050672
(87) Numéro de publication internationale: WO 2019/186041

(56) Documents cités:
- US-A1- 2003 179 912
- US-A1- 2003 233 557
- US-A1- 2011 154 485
- US-A1- 2015 128 234
- US-A1- 2015 317 851
- XUEFENG YIN ET AL: "Personal authentication using the fingerprints of intra-body radio propagation channels", MEDICAL INFORMATION AND COMMUNICATION TECHNOLOGY (ISMICT), 2013 7TH INTERNATIONAL SYMPOSIUM ON, IEEE, 6 March 2013 (2013-03-06), pages 159 - 163, XP032415573, ISBN: 978-1-4673-5770-8, DOI: 10.1109/ISMICT.2013.6521721
- ISAO NAKANISHI ET AL: "Biometric Identity Verification Using Intra-Body Propagation Signal", BIOMETRICS SYMPOSIUM, 2007, IEEE, PI, 1 September 2007 (2007-09-01), pages 1 - 6, XP031202446, ISBN: 978-1-4244-1548-9

## Description

### 1. Domaine de l'invention

L'invention concerne l'authentification d'un utilisateur, via des communications initiées sur un canal sans fil à courte portée. Plus précisément, l'invention porte sur un procédé pour authentifier un utilisateur auprès d'une application ou d'un dispositif, par l'intermédiaire d'un terminal portatif de l'utilisateur apte à établir une communication utilisant la capacité de conductivité du corps humain pour transmettre les ondes électromagnétiques porteuses de telles communications sans fils.

### 2. Art Antérieur

Il existe des systèmes permettant à un utilisateur de signer un reçu, ou un contrat de manière digitale, par exemple dans le cas de la remise d'un recommandé par La Poste. De tels systèmes nécessitent une surface tactile sur laquelle l'utilisateur trace les caractères, lettres de sa signature, ou de ses initiales avec le doigt ou à l'aide d'un stylet par exemple.

De tels systèmes enregistrent alors la suite de lettres tracées par l'utilisateur sous la forme d'une image par exemple. Cependant, de tels systèmes ne sont en général pas équipés pour contrôler l'authenticité de la signature de l'utilisateur et ne permettent pas de valider que c'est bien l'utilisateur qui a signé.

Des systèmes de reconnaissance d'écriture existent également qui permettent de déterminer si une suite de lettres manuscrites tracées par un utilisateur correspond à une suite de lettres manuscrites préalablement mémorisées. Toutefois, de tels systèmes sont mis en œuvre a posteriori, i.e. une fois que la signature à vérifier a été mémorisée et sont basées sur des algorithmes complexes d'analyse d'images. Ils nécessitent également un apprentissage initial de la signature de l'utilisateur, et qu'au moment où la vérification est nécessaire, cet apprentissage soit accessible au dispositif sur lequel l'utilisateur trace la signature à vérifier. Un tel mécanisme n'est alors pas adapté au cas où le dispositif sur lequel l'utilisateur trace la signature à vérifier est utilisé pour la première fois par l'utilisateur, par exemple lors de la signature d'un reçu.

De plus, de tels systèmes nécessitent un capteur spécifique, tel qu'une surface tactile, sur laquelle l'utilisateur trace les caractères. Une telle méthode n'est donc pas adaptée à tous les dispositifs qu'un utilisateur est susceptible d'utiliser lors d'une action nécessitant une authentification, par exemple signer un accusé-réception, parapher un document juridique digitalisé chez un notaire par exemple, s'authentifier auprès d'une borne pour accéder à un lieu sécurisé, réaliser un paiement sécurisé, etc.....

### 3. Exposé de l'invention

L'invention vient améliorer l'état de la technique. Elle concerne à cet effet un procédé d'authentification d'un utilisateur, mis en œuvre par un processeur. Un tel procédé comprenant:
- la réception d'un signal représentatif d'au moins un caractère tracé par l'utilisateur sur une surface d'un dispositif émetteur comprenant une antenne apte à émettre un signal radio à destination d'un terminal de l'utilisateur via un canal utilisant des capacités de conduction d'onde électromagnétique du corps de l'utilisateur lorsque la main de l'utilisateur trace ledit au moins un caractère sur ou à proximité de la surface du dispositif émetteur,
- la vérification si le signal reçu correspond à un signal de contrôle préalablement mémorisé,
- dans le cas d'une vérification positive, la validation de l'authentification de l'utilisateur.

Avantageusement, lorsque l'utilisateur trace au moins un caractère sur la surface du dispositif émetteur, une onde porteuse radio, ou signal électromagnétique, est transmise par le dispositif émetteur à travers le corps de l'utilisateur vers un terminal de l'utilisateur, par exemple un téléphone mobile, adapté à recevoir un tel signal.

Un tel signal est caractéristique des caractères tracés par l'utilisateur. En effet, lorsque l'utilisateur trace des caractères sur le dispositif émetteur, son ou ses doigts se déplacent sur la surface de l'antenne du dispositif émetteur, ce qui crée des variations du champ électromagnétique capté par le terminal de l'utilisateur. L'amplitude du signal reçu par le terminal de l'utilisateur est ainsi modifiée en fonction des caractères tracés par l'utilisateur et de la manière dont l'utilisateur trace ces caractères. Le signal est ainsi représentatif de l'écriture de l'utilisateur.

De plus, la forme du signal généré et transmis via le corps de l'utilisateur dépend également d'un certain nombre de caractéristiques propres au porteur (corpulence, âge, sexe, humidité des tissus, etc.), ainsi que des moyens de réception du terminal (caractéristiques et position de l'antenne, etc.). L'analyse d'un tel signal (forme, puissance, etc.) permet donc d'en dégager des caractéristiques propres à l'utilisateur et aux caractères tracés par l'utilisateur et donc de le reconnaître par comparaison avec un signal similaire connu.

Le signal de contrôle peut par exemple correspondre à un signal représentatif d'une suite de caractères tracés par l'utilisateur lors d'une phase d'initialisation, ou à des paramètres issus d'un apprentissage d'un signal représentatif d'une suite de caractères tracés par l'utilisateur lors de la phase d'initialisation. Un tel signal peut ainsi être interprété comme une signature biométrique de l'utilisateur.

Selon une autre variante, le signal de contrôle peut correspondre à une suite de caractères codés préalablement mémorisés, par exemple des caractères codés selon le standard ASCII, ou tout autre protocole interprétable par un ordinateur. Selon cette dernière variante, des signaux représentatifs respectivement de caractères tracés par l'utilisateur ont été appris lors de la phase d'initialisation et des données représentatives de cet apprentissage ont été mémorisées, par exemple sous la forme de paramètres issus de l'apprentissage, tels que des poids d'un réseau de neurones.

Si un autre utilisateur s'approprie le terminal, il ne dispose pas des mêmes caractéristiques biométriques, et les caractères tracés par cet autre utilisateur génèreront un signal différent. En effet, quand bien même l'autre utilisateur aurait connaissance des caractères à tracer pour imiter une signature du premier utilisateur, cet autre utilisateur devrait en plus imiter la manière dont le premier utilisateur trace les caractères. De plus, même si cet autre utilisateur connaît les caractères à tracer et imite la manière dont le premier utilisateur trace les caractères, cet autre utilisateur sera trahi par sa composante intrinsèque.

Le procédé décrit ci-dessus permet ainsi de fournir une authentification plus sécurisée de l'utilisateur.

Pour que la communication soit établie sur le canal CBB (pour Communication By Body en anglais), le terminal doit être à proximité du canal de transmission, donc du corps de l'utilisateur, par exemple une distance inférieure à quelques cm, ce qui est raisonnable pour que l'utilisateur porte le terminal dans une poche. On notera que la peau de l'utilisateur n'a pas besoin d'être en contact avec le terminal pour que la communication s'établisse ; de même la main de l'utilisateur n'est pas non plus nécessairement en contact physique avec l'antenne du dispositif émetteur.

Selon un mode particulier de réalisation de l'invention, la vérification comprend l'obtention d'au moins une donnée d'authentification propre à l'utilisateur préalablement mémorisée.

Selon une variante de ce mode particulier de réalisation de l'invention, la donnée d'authentification correspond au signal de contrôle lui-même. Par exemple, lors de la phase d'apprentissage, le signal de contrôle est généré pour l'utilisateur lorsque celui-ci trace une suite de caractères sur le dispositif émetteur, par exemple sa signature, ses initiales, un mode de passe, etc ...

Selon une autre variante de ce mode particulier de réalisation de l'invention, la donnée d'authentification correspond au signal ou aux paramètres d'apprentissage issus de l'apprentissage de signaux représentatifs respectivement du tracé par l'utilisateur de plusieurs caractères sur le dispositif émetteur, par exemple tout ou partie des lettres de l'alphabet, des chiffres, etc. Selon cette autre variante, il est possible d'avoir une donnée d'authentification propre à un utilisateur, tout en utilisant un signal de contrôle générique, ou commun à plusieurs utilisateurs.

Selon un autre mode particulier de réalisation de l'invention, le dispositif d'authentification utilise un identifiant de l'utilisateur pour sélectionner au moins une donnée d'authentification propre à l'utilisateur parmi un ensemble de données d'authentification d'utilisateurs. Selon cet autre mode particulier de réalisation de l'invention, le dispositif d'authentification est apte à authentifier plusieurs utilisateurs pour lesquels des données d'authentification ont préalablement été mémorisées. Par exemple, l'identifiant de l'utilisateur correspond à un numéro de téléphone de l'utilisateur, ou un code d'accès stocké dans la mémoire du terminal.

Selon un autre mode particulier de réalisation de l'invention, la vérification comprend en outre la reconnaissance de chaque caractère tracé par l'utilisateur à partir de la au moins une donnée d'authentification obtenue, délivrant une suite de caractères reconnus, et la détermination si la suite de caractères reconnus correspond au signal de contrôle préalablement mémorisé. Selon ce mode particulier de réalisation de l'invention, le signal de contrôle a été préalablement enregistré directement sous forme numérique, par exemple comme un mot de passe, ou un code, etc... Selon ce mode particulier de réalisation de l'invention, une phase d'apprentissage a été réalisée pour apprendre le tracé par l'utilisateur de chaque caractère au moins compris dans le signal de contrôle. Cet apprentissage peut être réalisé indépendamment pour chaque caractère compris dans le signal de contrôle, ou pour plus de caractères si le signal de contrôle est susceptible d'être mis à jour. Ainsi, la phase d'apprentissage n'a pas besoin d'être refaite à nouveau.

Selon un autre mode particulier de réalisation de l'invention, le signal représentatif d'au moins un caractère tracé par l'utilisateur est reçu par un dispositif d'authentification, en provenance du terminal de l'utilisateur. Selon ce mode particulier de réalisation de l'invention, le procédé d'authentification est mis en œuvre par un dispositif d'authentification distinct du terminal de l'utilisateur.

Dans ce cas, un signal représentatif des caractères tracés par l'utilisateur est émis par le dispositif émetteur via le canal CBB vers le terminal de l'utilisateur. Ce signal est ensuite retransmis par le terminal vers un dispositif d'authentification qui valide ou non l'authentification. Par exemple, un tel mode particulier de réalisation de l'invention peut être utilisé pour authentifier un utilisateur lors d'un contrôle d'accès à un lieu sécurisé par une borne d'accès. En variante, le dispositif d'authentification et le dispositif émetteur peuvent être compris dans un même dispositif.

Selon un autre mode particulier de réalisation de l'invention, la validation comprend l'envoi à un dispositif de contrôle d'un signal de validation de l'authentification. Selon ce mode particulier de réalisation de l'invention, le dispositif de contrôle peut être le dispositif émetteur ou un autre dispositif apte à contrôler un service auquel l'utilisateur souhaite accéder via son authentification. Il peut s'agir, par exemple, d'une borne d'accès à un lieu sécurisé, un serveur bancaire pour autoriser une transaction bancaire, etc...

Selon un autre mode particulier de réalisation de l'invention, la vérification est mise en œuvre par un réseau de neurones ayant préalablement appris la au moins une donnée d'authentification propre à l'utilisateur. Selon ce mode particulier de réalisation de l'invention, un apprentissage du réseau de neurones est préalablement mis en œuvre afin de paramétrer un réseau de neurones propre à l'utilisateur.

Selon une variante, un tel réseau de neurones peut également être propre au signal de contrôle mémorisé. En fonctionnement, lorsque l'authentification de l'utilisateur est nécessaire, le signal reçu est fourni en entrée du réseau de neurones qui fournit en sortie une valeur représentative de la correspondance entre le signal reçu et le signal de contrôle, par exemple une valeur de probabilité, ou une valeur booléen: par exemple 1 si l'authentification est réussie et 0 en cas d'échec de l'authentification.

Selon une autre variante, le réseau de neurones a appris un groupe de caractères tracés par l'utilisateur, par exemple les lettres de l'alphabet. En fonctionnement, lorsque l'authentification de l'utilisateur est nécessaire, le signal reçu est fourni en entrée du réseau de neurones qui fournit en sortie la suite de caractères que le réseau de neurones a reconnu à partir du signal reçu.

Selon un autre mode particulier de réalisation de l'invention, la vérification fournit une valeur de correspondance entre le signal reçu et le signal de contrôle, la vérification étant positive lorsque la valeur de correspondance est supérieure à un seuil déterminé. Selon ce mode particulier de réalisation de l'invention, la vérification de la correspondance entre le signal reçu et le signal de contrôle peut être assouplie, i.e. la vérification peut être considérée positive même si les deux signaux ne sont pas identiques à 100%. Par exemple, la vérification peut être positive si les deux signaux correspondent à 95%.

Un seuil de correspondance entre le signal reçu et le signal de contrôle peut ainsi être défini en fonction du niveau de sécurité nécessaire à l'application nécessitant une authentification de l'utilisateur.

L'invention concerne également un dispositif d'authentification d'un utilisateur, comprenant au moins une mémoire et un processeur configurés pour:
- recevoir un signal représentatif d'au moins un caractère tracé par l'utilisateur sur une surface d'un dispositif émetteur comprenant une antenne apte à émettre un signal radio à destination d'un terminal de l'utilisateur via un canal utilisant des capacités de conduction d'onde électromagnétique du corps de l'utilisateur lorsque la main de l'utilisateur trace ledit au moins un caractère sur ou à proximité de la surface du dispositif émetteur,
- vérifier si le signal reçu correspond à un signal de contrôle préalablement mémorisé,
- valider l'authentification de l'utilisateur.

Selon un mode particulier de réalisation de l'invention, un tel dispositif comprend en outre un module de communication pour transmettre un signal de validation à un dispositif de contrôle.

L'invention concerne également un terminal comprenant un dispositif d'authentification selon l'un quelconque des modes particuliers de réalisation décrits ci-dessus.

L'invention concerne également un système d'authentification d'un utilisateur comprenant au moins un dispositif d'authentification selon l'un quelconque des modes particuliers de réalisation décrits ci-dessus et ledit dispositif émetteur ou ledit terminal.

Selon un mode particulier de réalisation de l'invention, un tel système comprend en outre un dispositif de contrôle configuré pour recevoir un signal de validation du dispositif d'authentification.

L'invention concerne également un programme d'ordinateur comportant des instructions pour la mise en œuvre du procédé décrit ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, une clé USB. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- les figures 1A, 1B et 1C illustrent des exemples d'environnement de mise en œuvre de l'invention selon des modes particuliers de réalisation de l'invention,
- la figure 2 représente un terminal selon un mode de réalisation de l'invention ;
- la figure 3 représente un dispositif émetteur selon un mode de réalisation de l'invention ;
- la figure 4A représente des étapes d'un procédé d'apprentissage d'au moins une donnée d'authentification d'un utilisateur selon un mode de réalisation de l'invention,
- la figure 4B représente des étapes d'un procédé d'apprentissage d'au moins une donnée d'authentification d'un utilisateur selon un autre mode de réalisation de l'invention,
- la figure 5A représente les étapes d'un procédé d'authentification selon un mode de réalisation de l'invention,
- la figure 5B représente les étapes d'un procédé d'authentification selon un autre mode de réalisation de l'invention,
- la figure 6 représente un exemple de signal représentatif d'un caractère tracé plusieurs fois par un utilisateur sur une surface d'un dispositif émetteur,
- la figure 7 représente un exemple de signal représentatif d'une suite de caractères tracés par un utilisateur sur une surface d'un dispositif émetteur.

### 5. Description d'un mode de réalisation de l'invention

### 5.1 Principe général de l'invention

Le principe général de l'invention est d'utiliser les nouvelles techniques de communication sans fils utilisant pour canal le corps humain pour générer un signal représentatif d'une suite de caractères tracés par un utilisateur, par exemple des caractères alphanumériques, sur une surface d'un dispositif émetteur et reçu par un terminal de l'utilisateur. A l'aide de ce signal généré et d'au moins une donnée d'authentification préalablement apprise pour l'utilisateur, il est possible de vérifier si le signal reçu par le terminal est bien représentatif d'un signal de contrôle préalablement mémorisé. Il est ainsi possible de déterminer si l'utilisateur ayant tracé les caractères est bien l'utilisateur du terminal. L'invention permet ainsi par exemple de définir un nouveau type de signature biométrique.

### 5.2 Modes particuliers de réalisation de l'invention.

Au cours des décennies passées sont apparues de nouvelles techniques de communication sans fils utilisant pour canal le corps humain. Dans ces technologies que l'on regroupe sous le terme générique d'IBC (de l'anglais : *Intra-Body Communication*) ou encore BCC (pour *Body Channel Communication*)*,* le corps humain agit comme un conducteur pour transmettre des informations d'un point à un autre. On s'intéresse ici plus particulièrement aux méthodes basées sur un couplage par induction, aussi appelées fréquemment « méthodes par champ proche » ou NF (de l'anglais *Near Field*), adaptées à une communication de proximité. Les communications en champ proche sont usuellement connues sous le sigle « NFC » (pour « Near Field Communication »), basées principalement sur la norme ISO (International Standard Organisation) 14443, utilisent des technologies sans fils pour permettre un échange d'informations entre deux périphériques éloignés d'une courte distance.

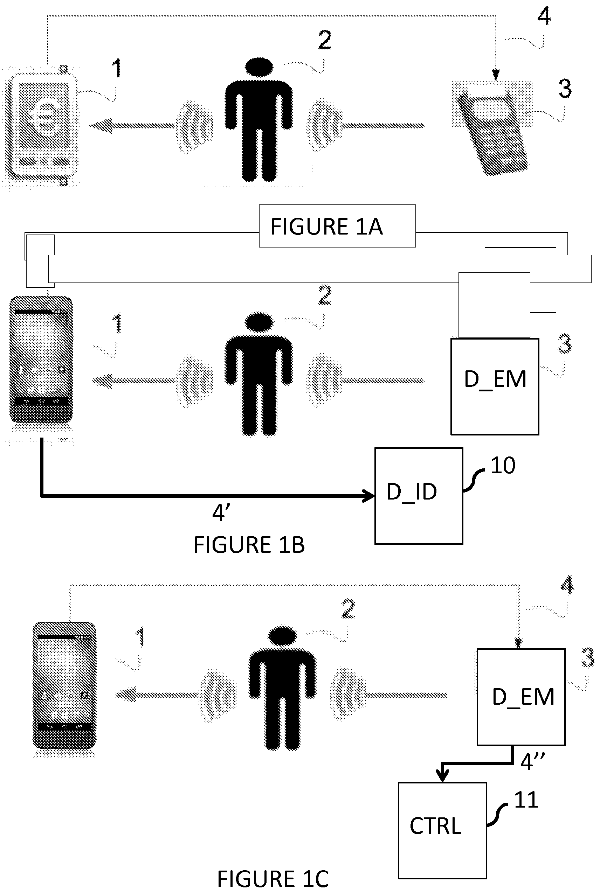

Les figures 1A, 1B, et 1C représentent un système de communication sans fils selon différents modes de réalisation de l'invention lorsqu'un utilisateur (2) porteur d'un dispositif portatif (1), appelé dans la suite terminal, équipé d'un module CBB tel que défini auparavant, trace à l'aide d'au moins un doigt une suite de caractères, par exemple des caractères alphanumériques, sur une surface d'un dispositif émetteur (3), pour s'authentifier auprès d'un dispositif ou d'un service.

Par service, on entend tout type de service, par exemple une transaction monétaire, une validation de ticket, l'accès à un lieu sécurisé, l'apposition d'une signature ou d'un paraphe sur un document numérique, etc.

Le dispositif émetteur (3) peut être par exemple un objet connecté (en anglais, IOT pour Internet Of Things), un TPE (pour Terminal Electronique de Paiement), une borne de contrôle d'accès, un ordinateur personnel, une souris d'ordinateur, une passerelle domestique, etc. Il est apte à émettre des signaux radioélectriques de type NFC, à travers le corps de l'utilisateur, via une antenne NFC/CBB (non représentée). Dans cet exemple de réalisation, le dispositif émetteur (3) comprend une surface constituée par l'antenne éventuellement protégée et adaptée pour réagir lorsque l'utilisateur l'effleure ou entre en proximité avec elle, par exemple en approchant la main. Le terme « surface » n'est nullement limitatif et donné à titre illustratif, l'antenne étant le seul moyen indispensable au fonctionnement du dispositif. L'ensemble constitué de l'antenne, de la surface et plus généralement de tous les composants nécessaires à la mise en œuvre d'une communication IBC est appelé dans la suite « Module IBC émetteur», noté MIBCM. On notera que ce module correspond au module NFC standard d'une borne de type NFC paramétrée pour une communication CBB par le chargement d'un programme (logiciel) spécifique, sans modification du hardware. Le dispositif émetteur selon cet exemple (3) est un TPE comprenant par exemple une interface utilisateur, encore appelée IHM (pour Interface Homme Machine), destinée à afficher des messages à l'attention de l'utilisateur. Selon l'invention, une telle interface utilisateur peut être apte à recevoir éventuellement des données, mais une telle capacité n'est pas nécessaire pour la réalisation de l'invention.

Le terminal (1) selon l'invention est un dispositif portatif naturellement apte à recevoir des ondes porteuses radio, via une antenne, à travers le corps de l'utilisateur (2). A cette fin, le terminal (1) est situé à proximité immédiate de l'utilisateur (2), sans nécessairement être en contact direct avec celui-ci. Par exemple, le terminal (1) est placé à l'intérieur d'une poche ou d'un sac porté contre l'utilisateur. Dans ces configurations, on estime que le terminal (1) n'est pas éloigné de plus de quelques centimètres du corps de l'utilisateur (2). La distance est par exemple inférieure à 5 cm. Le terminal (1) est équipé d'une batterie ou de piles, pour un fonctionnement autonome. Il s'agit selon cet exemple d'un terminal mobile équipé d'une antenne NFC (non représentée) adaptée en mode CBB pour recevoir les signaux électriques modulés sous forme d'une onde électromagnétique à travers le corps de l'utilisateur lorsque celui-ci se trouve à proximité immédiate du dispositif émetteur.

Selon un mode de réalisation préféré illustré en figure 1A, le terminal (1) comporte par ailleurs des moyens pour communiquer sur un second canal (4), par exemple Bluetooth ou Wi-Fi. L'utilisation d'un tel canal (4) permet des débits et vitesses de transmission plus élevées que le CBB. Ceci permet au terminal (1) de l'utilisateur de communiquer avec le dispositif émetteur (3), par exemple pour transmettre un signal de validation lorsque le procédé d'authentification décrit plus loin est mis en œuvre par le terminal, ou un signal ou des signaux représentatifs des caractères tracés par l'utilisateur lorsque le procédé d'authentification décrit plus loin est mis en œuvre par le dispositif émetteur.

Selon un autre mode de réalisation préféré illustré en figure 1B, le terminal (1) comporte par ailleurs des moyens pour communiquer sur un autre canal (4'), par exemple Wi-Fi. Ceci permet au terminal de l'utilisateur de communiquer avec un dispositif de contrôle (10), e.g. un serveur bancaire pour autoriser une transaction. Un tel canal (4') permet par exemple au terminal (1) de transmettre un signal de validation, par exemple via un réseau de données IP et une liaison WIFI, au dispositif de contrôle (10), lorsque le procédé d'authentification décrit plus loin est mis en œuvre par le terminal (1).

La figure 1C illustre une variante du mode de réalisation illustré en figure 1A. Selon cette variante, le dispositif émetteur (3) comporte par ailleurs des moyens pour communiquer sur un autre canal (4"), par exemple Bluetooth ou Wi-Fi. Ceci permet au dispositif émetteur (3) de communiquer avec un dispositif de contrôle (11), e.g. une porte sécurisé dont le dispositif émetteur (3) contrôle l'accès. Un tel canal (4") permet par exemple au dispositif émetteur (3) de transmettre un signal de validation au dispositif de contrôle (11), lorsque le procédé d'authentification décrit plus loin est mis en œuvre par le dispositif émetteur (3).

Selon un premier scénario, l'utilisateur (2) est par exemple dans un magasin et souhaite régler un achat à l'aide d'une carte bancaire dématérialisée située sur son terminal (1). Le dispositif émetteur (3) est apte à établir avec le terminal mobile (1) une communication sécurisée dans le but de valider la transaction monétaire ; l'utilisateur doit être authentifié, c'est-à-dire qu'à l'issue du procédé on est certain qu'il est bien le propriétaire du terminal.

Selon un autre scénario, l'utilisateur (2) souhaite accéder à un lieu sécurisé dont l'accès est contrôlé par un code d'accès ou une signature. Le dispositif émetteur (3) est une borne d'accès placée à proximité de la porte sécurisée. Le procédé permet de déterminer si l'utilisateur est bien un utilisateur autorisé à accéder au lieu sécurisé.

Dans les deux cas, le procédé selon l'invention procède en deux temps, ou phases distinctes :

### Première phase : apprentissage d'au moins une donnée d'authentification de l'utilisateur

Dans un premier temps, qui correspond à une phase dite d'apprentissage, l'utilisateur trace plusieurs fois (dans la suite, N fois, où N est un entier naturel) un caractère ou une suite de caractères sur une surface d'un lecteur associé à un module d'apprentissage. On notera que pour cette étape, l'utilisateur n'est pas forcément dans le magasin. Le but de cette étape est de récupérer, de préférence sur le terminal (ou alternativement, sur un autre dispositif avec lequel le terminal est apte à échanger des données) une pluralité (N) de signaux qui correspondent aux signaux générés par la personne (2) lorsqu'elle trace un même caractère ou une même suite de caractères autant de fois (N) sur une surface du lecteur.

Ces signaux correspondent aux caractéristiques de l'utilisateur et de la manière dont il trace des caractères. Ces signaux peuvent présentés de petites variations, car l'utilisateur ne peut pas tracer toujours de manière identique un même caractère ou une même suite de caractères, i.e. avec les mêmes paramètres mécaniques/dynamiques. De plus ses paramètres physiologiques peuvent par ailleurs varier au cours du temps, entraînant une variation du signal propagé à travers le corps.

Aussi, selon un mode particulier de réalisation, la phase d'apprentissage des données d'authentification de l'utilisateur est mise en œuvre sur plusieurs jours. Par exemple, l'utilisateur trace le caractère ou la suite de caractères à apprendre une ou plusieurs fois un premier jour, puis une ou plusieurs fois un autre jour, etc...

Le terminal de l'utilisateur intervient aussi sur la forme du signal reçu. Néanmoins pour une personne donnée traçant un caractère donné ou une suite de caractères donnée, tous les signaux sont de forme globale très similaire et représentent une sorte de signature biométrique et comportementale de l'utilisateur, qu'on appellera par la suite « données d'authentification» ou « signature » de l'utilisateur. Les données d'authentification sont donc représentatives :
- de caractères tracés par l'utilisateur, par exemple des lettres de l'alphabet, des chiffres, des signes de ponctuation, etc..., ou d'une suite ordonnée de caractères tracés par l'utilisateur: par exemple ses initiales, son nom, un code d'accès, un mot de passe, etc... Ainsi, chaque utilisateur peut avoir ses propres données d'authentification.

Lorsque les données d'authentification ont été apprises pour l'utilisateur, elles peuvent ensuite être utilisées pour vérifier si un signal représentatif d'une suite de caractères tracés par l'utilisateur correspond effectivement à un signal de contrôle permettant d'authentifier l'utilisateur.

Dans le cas où les données d'authentification sont représentatives d'un apprentissage d'une suite ordonnée de caractères tracés par l'utilisateur, le signal de contrôle peut correspondre directement aux données d'authentification. Dans ce cas, le signal de contrôle est propre à l'utilisateur car il comprend des caractéristiques intrinsèques à l'utilisateur.

La suite de caractères représentée par le signal de contrôle peut également être commune à plusieurs utilisateurs, mais lorsqu'elle est tracée par un utilisateur en particulier, la suite de caractères est propre à l'utilisateur car la suite de caractères tracés comporte des caractéristiques de la manière dont l'utilisateur trace les caractères,
- de ses caractéristiques intrinsèques ; en plus des paramètres biométriques comportementaux qui conditionnent la transmission du signal, certains facteurs biologiques, comme par exemple l'âge, la condition physique, le contrôle moteur, l'humidité des tissus du corps etc. de l'utilisateur peuvent influer sur ses caractéristiques de transmission. On pourra par exemple se référer à l'article « Intra-Body Communication Model Based on Variable Biological Parameters » (Khorshid et al., 2015, 49th Asilomar Conference on Signals, Systems and Computers).
- des caractéristiques du terminal lui-même, et notamment de son circuit de réception CBB (caractéristiques et orientation de l'antenne, proximité du corps de l'utilisateur, etc.).

Dans le cas où les données d'authentification sont représentatives d'un apprentissage d'un ensemble de caractères tracés séparément par l'utilisateur, sans ordre, et appris indépendamment, le signal de contrôle peut correspondre à une suite de caractères mémorisée sous une forme interprétable par un ordinateur. Dans ce cas, le signal de contrôle peut ou non être propre à l'utilisateur, il peut s'agir d'un mot de passe commun à plusieurs utilisateurs, ou bien des initiales de l'utilisateur, ....

Les données d'authentification (SIG) peuvent être obtenues par les N mesures légèrement différentes confiées à un module d'apprentissage chargé de calculer une « valeur moyenne », des différents signaux, ou signal type correspondant données d'authentification. Ce module est typiquement un module d'apprentissage automatique, en anglais « machine learning » (ML). On rappelle que l'apprentissage automatique, ou apprentissage statistique, concerne la conception, l'analyse, le développement et l'implémentation de méthodes permettant à une machine (au sens large) d'évoluer par un processus systématique, et ainsi de remplir des tâches difficiles ou problématiques par des moyens algorithmiques plus classiques. Un exemple possible d'apprentissage automatique est celui de la classification dont le but est d'étiqueter chaque donnée en l'associant à une classe.

Selon un mode de réalisation préféré, on utilise ici des réseaux de neurones. Selon ce mode de réalisation, classiquement le module d'apprentissage apprend des données d'authentification à partir des différents signaux d'un utilisateur, i.e. il définit ses paramètres pour permettre ensuite à partir de n'importe quel signal reçu de pouvoir fournir en sortie une indication de correspondance entre le signal reçu et des données d'authentification issues de l'apprentissage.

Pendant la phase d'utilisation, le réseau de neurone peut également fournir une classe d'appartenance du signal reçu. Par exemple, dans le cas d'un apprentissage de reconnaissance d'un alphabet, chaque symbole de l'alphabet correspondant à une classe, le réseau de neurones permet de déterminer à quelle classe, i.e. quel symbole de l'alphabet, le signal reçu correspond. Selon cet exemple, dans le cas d'une suite de caractères à reconnaître, le réseau de neurones traitera successivement plusieurs signaux reçus pour reconnaître les différents caractères tracés.

Le module d'apprentissage enregistre ensuite dans une base de données les données d'authentification d'utilisateurs éventuellement repérés par leurs identifiants. Par exemple, les paramètres déterminés par chaque réseau de neurones associé à un utilisateur sont enregistrés.

Une fois que l'apprentissage a été effectué, les données d'authentification résultantes ou les paramètres du réseau de neurones correspondant aux données d'authentification peuvent avantageusement être enregistrés sur le terminal de l'utilisateur ou le dispositif émetteur. Si le terminal ou le dispositif émetteur est utilisé par plusieurs utilisateurs, plusieurs données d'authentification ou plusieurs ensembles de paramètres de réseau de neurones peuvent être enregistrés, par exemple en liaison avec un identifiant de chaque utilisateur.

### Seconde phase : exploitation des données d'authentification

Dans une seconde phase (de mise en œuvre du service), l'utilisateur du terminal mobile IBC qui souhaite valider une transaction s'approche du dispositif émetteur (3, par exemple une borne) et trace une suite de caractères sur une surface du dispositif émetteur ou à proximité du dispositif émetteur. Lorsque le canal de communication est établi, le signal se propage de la borne (3) vers le mobile (1) de l'utilisateur, à travers son corps.

Un module de vérification du terminal ou avec lequel le terminal peut communiquer (par exemple sur un serveur externe), vérifie le signal émis par le dispositif émetteur. Il est capable, typiquement, de vérifier que le signal reçu correspond bien à un signal de contrôle, qui a été préalablement enregistré sur le terminal ou dans une base de données accessible du terminal. En variante, le module de vérification peut être compris dans le dispositif émetteur. Dans ce cas, le signal reçu par le terminal est retransmis via un autre canal (4) vers le dispositif émetteur.

Si le signal reçu correspond au signal de contrôle, l'utilisateur est authentifié.

Toutes les données nécessaires à l'établissement, la poursuite et la conclusion du service peuvent être échangées entre le terminal (ou le dispositif émetteur) et le dispositif émetteur (ou dispositif de contrôle). Par exemple, un canal Bluetooth ou Wi-Fi (4, 4', 4") est établi pour échanger des données, valider un ticket, ouvrir une porte d'accès, enregistrer un contrat numérique, etc .....

On rappelle que l'antenne intégrée au terminal est portée par l'utilisateur. L'invention présente donc un avantage essentiel d'ergonomie et de sécurité en ce sens qu'elle permet à la personne souhaitant accéder à un service sécurisé d'être authentifiée via une suite de caractères tracées manuellement sans avoir à sortir son terminal de sa poche ou de son sac, et sans utiliser de clavier pour rentrer un code confidentiel qui pourrait être espionné.

Cet exemple de réalisation a été donné à titre illustratif et nullement limitatif. De nombreuses variantes pourraient y être apportées. Notamment :
- un autre dispositif, par exemple un serveur externe, peut réaliser l'apprentissage et/ou la reconnaissance sur réception des données en provenance du terminal ou du dispositif émetteur.
- on peut imaginer de modéliser le corps humain comme un canal de transmission caractérisable, c'est-à-dire qu'il peut être associé par exemple à une fonction de transfert, bien connue d'un homme du métier spécialiste du traitement des signaux. Dans ce cas, les caractéristiques de la fonction de transfert peuvent remplacer avantageusement les courbes précitées. Un exemple de telle modélisation est proposée par exemple dans l'article « Intra-Body Communication Model Based on Variable Biological Parameters » de Khorshid et al. cité plus haut.

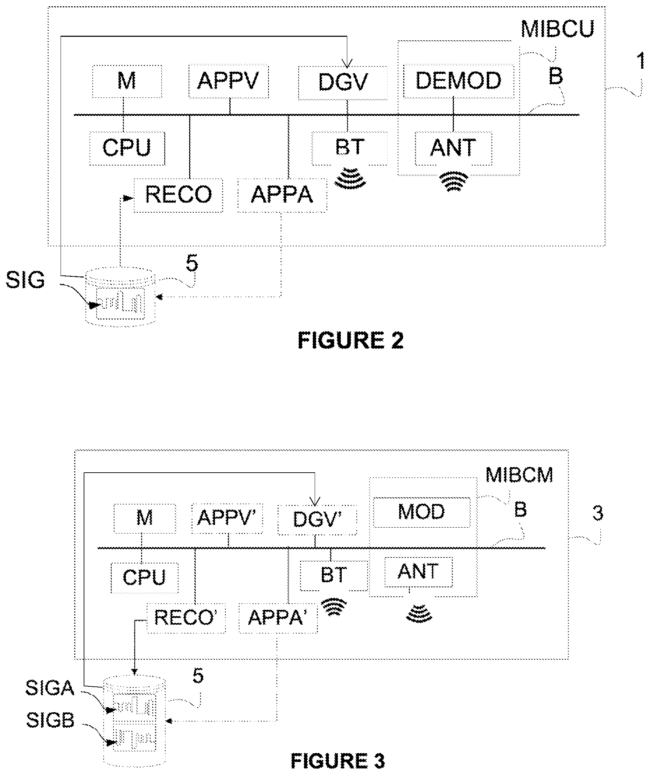

Un dispositif terminal (1) selon l'invention va maintenant être décrit en relation avec la figure 2. Le terminal (1) est par exemple un terminal mobile de type *smartphone* adapté pour mettre en œuvre l'invention. Selon un autre exemple, le terminal est une simple carte électronique équipée des modules suivants :
- une unité de traitement, ou « CPU » (pour « Central Processing Unit »), destinée à charger des instructions en mémoire, à les exécuter, à effectuer des opérations ;
- un ensemble M de mémoires, dont une mémoire volatile, ou "RAM" (pour "Random Access Memory") utilisée pour exécuter des instructions de code, stocker des variables, etc. et une mémoire non volatile de type « ROM » (de l'anglais « Read Only Memory »), ou « EEPROM » (pour « Electronically Erasable Programmable Read Only Memory ») destinée à contenir des informations persistantes, notamment des données d'identification de l'utilisateur, par exemple un numéro de mobile, un identifiant, etc.... Selon un mode de réalisation de l'invention, la mémoire M contient une zone mémoire (5), de préférence sécurisée, contenant des données d'authentification d'un utilisateur du terminal au moins.
- un module dit « Module IBC utilisateur », MIBCU, incluant :
   - une antenne CBB (ANT) adaptée pour recevoir des signaux sur la voie radio et via le corps humain, de manière à ce qu'un signal électrique modulé transporté par le corps de l'utilisateur soit apte à être reçu par l'antenne, qui se trouve dans le terminal, en proximité avec le corps humain ;
   - un démodulateur (DEMOD), destiné à recevoir via l'antenne un signal électrique modulé et à le transformer en un signal numérique destiné à être transmis à l'unité de traitement ;
   - les composantes logicielles (*firmware,* etc.) nécessaires à la mise en œuvre des communications CBB;
- un module radio (BT) de type Bluetooth ou WiFi destiné à transmettre notamment des données en retour depuis le mobile vers un dispositif émetteur.
- de préférence, et notamment si ces modules ne sont pas mis en œuvre sur un autre dispositif :
   - un module de vérification DGV pour analyser un signal reçu par le module CBB et déterminer si le signal reçu correspond à un signal de contrôle préalablement mémorisé,
   - un module applicatif APPV pour valider ou non l'authentification de l'utilisateur selon que le signal reçu correspond au signal de contrôle ou non,
   - selon un mode particulier de réalisation, un module de reconnaissance RECO apte à coopérer avec le module de vérification DGV et configuré pour reconnaître une suite de caractères à partir d'un signal reçu et de données d'authentification (SIG) de l'utilisateur du terminal,
- de préférence, et notamment si ce module n'est pas mis en œuvre sur un autre dispositif , une application (APPA) destinée à la mise en œuvre d'un procédé d'apprentissage selon des modes de réalisation de l'invention, notamment :
   - l'apprentissage d'au moins une donnée d'authentification de l'utilisateur ;
   - un accès à une base de données d'authentification (5) contenant les données d'authentification d'un ou plusieurs utilisateurs potentiels du terminal.

On notera que ce module d'apprentissage et cette base de données ne sont pas nécessairement situés sur le terminal : ils peuvent être sur un serveur dans un réseau de données, sur le dispositif émetteur si l'on souhaite un fonctionnement centralisé, etc.

Un dispositif émetteur (3) selon l'invention va maintenant être décrit en relation avec la figure 3.

Le dispositif émetteur comprend plusieurs modules qui sont similaires à ceux du terminal 1 décrit en relation avec la figure 2 :
- une unité de traitement ou « CPU », destinée à charger des instructions en mémoire, à les exécuter, à effectuer des opérations.
- un ensemble M de mémoires, dont une mémoire volatile ou "RAM" (pour "Random Access Memory") utilisée pour exécuter des instructions de code, stocker des variables, etc., et une mémoire non volatile, de type « ROM » ou « EEPROM » destinée à contenir des informations persistantes ;

- un module dit « Module IBC émetteur », MIBCM, incluant :
   - une antenne CBB (ANT) adaptée pour émettre des signaux sur la voie radio et via le corps humain ;
   - un modulateur (MOD) destiné à adapter un signal numérique produit par le microprocesseur en un signal électrique modulé, destiné à être transmis, via l'antenne, à travers le corps de l'utilisateur. L'opération de modulation effectuée par le modulateur est par exemple une modulation d'amplitude : le signal est un signal à 13,56 MHz modulé en amplitude avec un taux de modulation d'environ 10% (caractéristique connue du type B selon la norme NFC). L'invention n'est cependant pas limitée à ce type de modulation. Dans un autre exemple de réalisation, la modulation est une modulation de fréquence, moins sensible aux parasites, ou, une modulation de phase ;
   - une surface de contact, non représentée, adaptée pour réagir à la proximité immédiate de l'utilisateur (contact, quasi-contact, effleurement, etc.). Dans l'exemple décrit ici, cette surface correspond à l'antenne, de manière à ce qu'un signal électrique modulé émis via l'antenne soit apte à être véhiculé par le corps de l'utilisateur qui est en proximité avec la surface. Dans un exemple de réalisation, l'antenne peut être intégrée dans la surface. La surface est agencée de manière à coopérer avec l'unité de traitement pour mettre en œuvre les étapes du procédé qui sera décrit ultérieurement ;
- un module radio BT de type Bluetooth ou Wi-Fi destiné notamment à recevoir des données en provenance du terminal de l'utilisateur (signaux reçus par le terminal, signal de contrôle, données relatives à une transaction, etc.) et/ou à communiquer avec un autre dispositif pour valider une transaction (porte, objet connecté, etc.).
- les composantes logicielles (firmware, etc.) nécessaires à la mise en œuvre des communications IBC.
- optionnellement une interface utilisateur (IHM) non représentée, adaptée pour transmettre à l'utilisateur des instructions ou des messages d'information. Par exemple, l'interface utilisateur est un écran sur lequel les messages et instructions sont affichés. Dans un autre exemple de réalisation, l'interface est une interface audio permettant de jouer les messages et instructions, par exemple pour signifier à l'utilisateur s'il a été authentifié ou s'il n'a pas été correctement authentifié. L'IHM peut aussi comporter un clavier, un micro, etc.
- optionnellement, et notamment si ces modules ne sont pas présents sur les terminaux :
   - une application (APPA') destinée à la mise en œuvre d'un procédé d'apprentissage selon un mode de réalisation de l'invention, en relation avec une base de données d'authentification (5) ; sur la figure on a schématisé une base comprenant les données d'authentification de deux utilisateurs A et B notés SIGA et SIGB.
   - un module de vérification DGV' pour analyser un signal reçu par le module CBB et déterminer si le signal reçu correspond à un signal de contrôle préalablement mémorisé,
   - selon un mode particulier de réalisation, un module de reconnaissance RECO' apte à coopérer avec le module de vérification DGV' et configuré pour reconnaître une suite de caractères à partir d'un signal reçu et de données d'authentification de l'utilisateur du terminal,
   - un module applicatif APPV' destinée à la mise en œuvre du procédé d'authentification selon des modes de réalisation de l'invention.

On rappelle que n'importe quel lecteur du commerce (par exemple un TPE) peut avantageusement être utilisé en tant que dispositif émetteur, à condition de bénéficier du module MIBCM, après une simple mise à jour du logiciel du lecteur (installation et/ou mise à jour de l'application et paramétrage de l'émission NFC) pour le rendre apte à émettre un message possédant les caractéristiques (fréquence, modulation, etc.) CBB via son antenne.

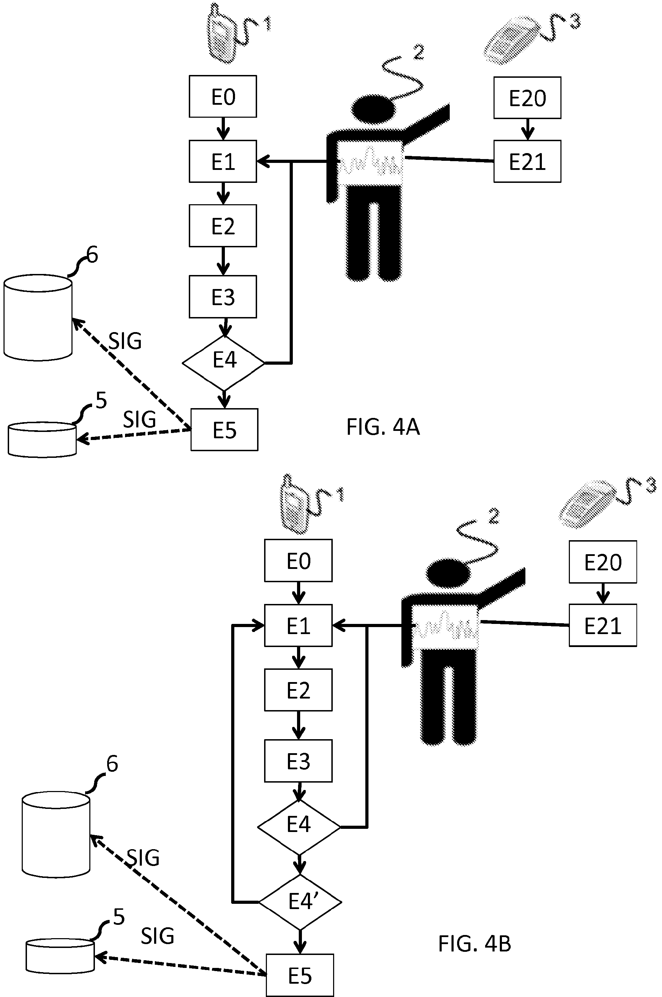

La figure 4A représente les étapes d'un procédé d'apprentissage selon un mode de réalisation de l'invention.

L'apprentissage est réalisé par répétition d'un tracé d'une suite de caractères sur un dispositif d'apprentissage, par exemple le dispositif émetteur. L'utilisateur se trouve par exemple dans une boutique d'un opérateur de télécommunications et s'apprête à tracer une suite de caractères qui génèrera ses données d'authentification. Selon le mode particulier décrit ici, les données d'authentification correspondent également au signal de contrôle qui sera utilisé par la suite pour vérifier l'authentification de l'utilisateur, lors de l'usage des services de type CBB.

Selon ce mode de réalisation, la communication est unidirectionnelle, depuis le dispositif d'apprentissage vers le terminal de l'utilisateur, et un canal de communication Bluetooth (4) est utilisé pour la communication depuis le terminal de l'utilisateur vers le dispositif d'apprentissage. Le terminal de l'utilisateur, par exemple de type smartphone CBB, se trouve dans la poche de l'utilisateur.

On suppose ici que tous les prérequis nécessaires à la communication CBB ont été effectuées aux cours d'étapes d'initialisation respectives E0 et E20, comme par exemple décrit dans la demande WO2017/093639, notamment la diffusion par le dispositif d'apprentissage d'un message d'invite comportant éventuellement des paramètres relatifs au service offert (identifiant du service, aléa, qui permettra notamment d'effectuer l'appairage Bluetooth, etc.), le positionnement du terminal en mode de réception CBB, le lancement du programme d'apprentissage, etc.

Lors d'une étape E21, l'utilisateur trace une suite de caractères vers le dispositif d'apprentissage (borne, TPE, etc.). La suite de caractères comporte au moins un caractère, par exemple un caractère alphanumérique. La suite de caractères peut être décidée par l'utilisateur lui-même, ou bien fournie à l'utilisateur, par exemple par le fournisseur du service nécessitant l'authentification de l'utilisateur.

Lors d'une étape E21, la communication s'établit sur le canal IBC. La borne émet le signal SP(t) transmis via le corps de l'utilisateur et portant les caractéristiques de la suite de caractères tracés par l'utilisateur. Un tel signal SP(t) est reçu par le terminal de l'utilisateur (1) au cours d'une étape E1.

Lors d'une étape E2, le terminal de l'utilisateur démodule et traite le signal reçu SP(t).

Lors d'une étape E3, le terminal mémorise le signal dans une mémoire (représentée ici sous la forme d'une base de données (6) à titre d'exemple). Alternativement il peut aussi transmettre le signal, à un serveur d'apprentissage externe. Au cours de l'étape E3, le signal reçu Sp(t) est fourni en entrée d'un réseau de neurones RES, dont les poids ont préalablement été initialisés à une ou des valeurs par défaut.

Lors de l'étape E4, un nombre d'itérations est testé et il est vérifié si un nombre N d'itérations des étapes E1-E3 a été réalisé; tant que le nombre souhaité d'itérations n'est pas atteint, le terminal de l'utilisateur demande à l'utilisateur de retracer la suite de caractères (étape E1), reçoit un nouveau signal Sp(t) (étape E1) qu'il fournit en entrée au réseau de neurones RES pour qu'il apprenne les données d'authentification de l'utilisateur correspondant à la suite de caractères tracés par l'utilisateur.

Par exemple, le réseau de neurones peut être utilisé comme décrit dans l'article « Authentification et Identification de Visages basées sur les Ondelettes et les Réseaux de Neurones. » de M.BELAHCENE-BENATIA Mébarka (Revue science des matériaux, Laboratoire LARHYSS N°02, Septembre 2014 pp.01-08). La méthode décrite, basée sur la transformation d'une image à deux dimensions d'un visage en un vecteur de taille N obtenu en enchaînant les lignes (ou colonnes) de l'image correspondante, suivie de l'établissement d'une matrice de covariance entre les différentes images, peut être facilement adaptée aux échantillons des signaux numériques issus des signaux Sp(t).

Le compteur N est par exemple fixé à 3 et trois signaux S₁(t), S₂(t), S₃(t) doivent être reçus et fournis au réseau de neurones RES.

On notera que le nombre N d'itérations peut être prédéfini (par exemple N=10) ou défini par l'algorithme lui-même : par exemple, le nombre d'itérations peut dépendre d'une valeur de sortie du réseau de neurones RES. Par exemple, on considère que le nombre d'itérations est atteint lorsque les coefficients du réseau de neurones, i.e. paramètres du réseau de neurones, sont quasiment stables d'une itération à la suivante. Autrement dit, on considère que le nombre d'itérations est atteint lorsque la différence entre les coefficients du réseau de neurones entre deux itérations est inférieure à 95% par exemple.

Lorsque le nombre d'itérations souhaité est atteint ou que la valeur de sortie est supérieure au seuil prédéterminé, l'apprentissage du réseau de neurones RES pour l'utilisateur est terminé et les données d'authentification de l'utilisateur sont déterminées. Par exemple, les données d'authentification sont représentées par les paramètres du réseau de neurones RES déterminés lors de l'apprentissage réalisé au cours des itérations des étapes E1-E2-E3.

Au cours d'une étape E5, les données d'authentification sont stockées dans une mémoire, ou base de données (5), soit dans le terminal de l'utilisateur, soit dans une base de données de données d'authentification, avec de préférence un identifiant de l'utilisateur (par exemple son nom, sa date de naissance, son numéro de téléphone, l'adresse MAC de son terminal, son numéro de compte bancaire, etc.).

Selon un autre mode de réalisation non représenté, c'est le dispositif émetteur (borne) qui apprend les données d'authentification. Dans ce cas, l'étape E1 de réception du signal ou E2 de démodulation et de traitement du signal par le terminal de l'utilisateur peut être suivie d'une étape de retransmission de ce signal vers le dispositif émetteur, via le canal Bluetooth.

L'apprentissage des données d'authentification de l'utilisateur a été décrit ci-dessus en utilisant un réseau de neurones. D'autres méthodes d'apprentissage sont bien entendu possibles, par exemple les N signaux Sp(t) reçus au cours des itérations des étapes E1-E2 peuvent être mémorisés et des données d'authentification sont déterminées à partir des N signaux mémorisés par toute méthode à la portée de l'homme du métier pour obtenir un signal représentatif des N signaux Sp(t), par exemple en effectuant une moyenne, ou en utilisant un système SVM (*Support Vector Machine*) pour classer les différents signaux reçus en les mettant dans le sous-ensemble correspondant aux signaux de l'utilisateur, etc.

Les données d'authentification peuvent prendre typiquement la forme d'un signal analogique ou numérique, c'est-à-dire une fonction représentant les variations du signal correspondant au tracé moyen de la suite de caractères de l'utilisateur sur un intervalle de temps, par exemple quelques secondes.

On décrit ci-après en relation avec la figure 4B un procédé d'apprentissage selon un autre mode particulier de réalisation. Selon ce mode particulier de réalisation de l'invention, les données d'authentification permettent de reconnaître une suite de caractères tracés par l'utilisateur lors de l'authentification, cette suite de caractères étant ensuite comparée avec un signal de contrôle pour valider ou non l'authentification de l'utilisateur.

Selon le mode de réalisation décrit ici, le procédé d'apprentissage permet au dispositif d'apprentissage d'apprendre le tracé de chaque caractère indépendamment, par exemple chaque lettre de l'alphabet est apprise seule et séparément des autres lettres.

Selon ce mode particulier de réalisation, le procédé d'apprentissage apprend à reconnaître des lettres ou caractères tracés par l'utilisateur parmi un groupe de caractères prédéterminés. Un tel groupe de caractères peut comprendre toutes ou une partie des lettres de l'alphabet latin, ou de tout autre alphabet, des chiffres, des idéogrammes, ou tout caractère apte à être représenté sous forme interprétable par un ordinateur, par exemple par un code ASCII, pour être stocké dans une mémoire.

Dans ce mode particulier de réalisation, les itérations des étapes E1-E3 sont réalisées successivement pour chaque caractère du groupe de caractères que le réseau de neurones RES doit pouvoir reconnaître. Le procédé d'apprentissage illustré en figure 4B est similaire à celui illustré en figure 4A, à ceci près que lors de l'étape E20, l'utilisateur est invité à tracer un caractère spécifique afin que le dispositif d'apprentissage sache quel caractère est en cours d'apprentissage. Eventuellement l'utilisateur peut indiquer lui-même via un clavier du dispositif d'apprentissage quel caractère il va tracer. Dans les 2 variantes présentées ici, on parle d'apprentissage supervisé.

De plus, le procédé d'apprentissage comprend en outre une étape E4' qui est réalisée à la fin de l'apprentissage d'un caractère, lorsque suite à l'étape E4, il est déterminé que le nombre d'itérations pour l'apprentissage de ce caractère est atteint. Lors de l'étape E4', il est vérifié si tous les caractères du groupe à apprendre ont été appris. Si c'est le cas, le procédé passe à l'étape E5, sinon le procédé procède à l'apprentissage d'un autre caractère du groupe.

Dans ce mode de réalisation, lors de l'étape E5, les paramètres du réseau de neurones représentatifs de l'apprentissage des lettres tracées par l'utilisateur sont stockés en tant que données d'authentification.

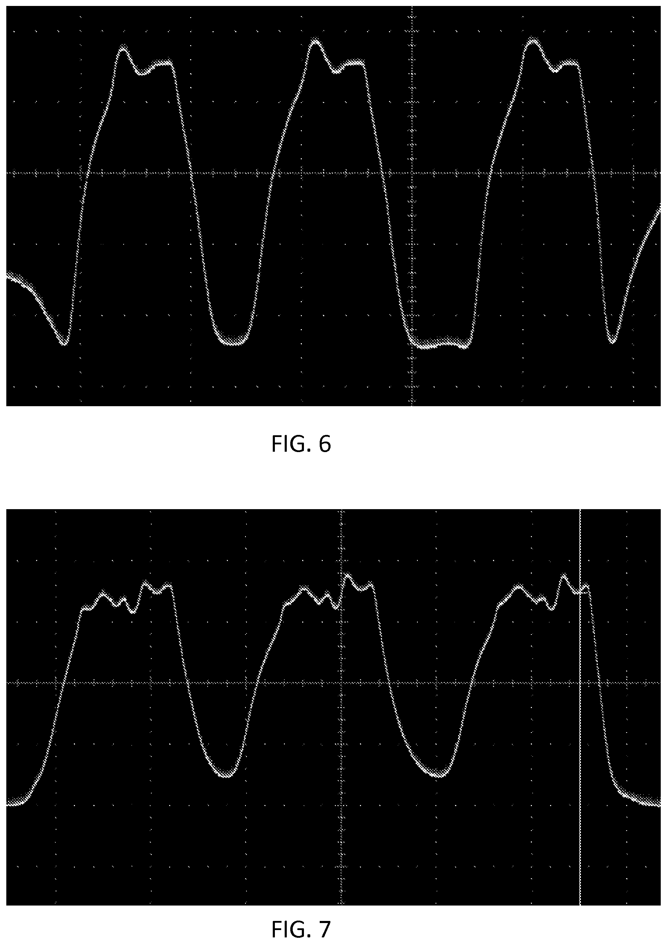

La figure 6 représente un exemple de signal représentatif d'un caractère tracé plusieurs fois par un utilisateur sur une surface d'un dispositif émetteur, ici la lettre C.

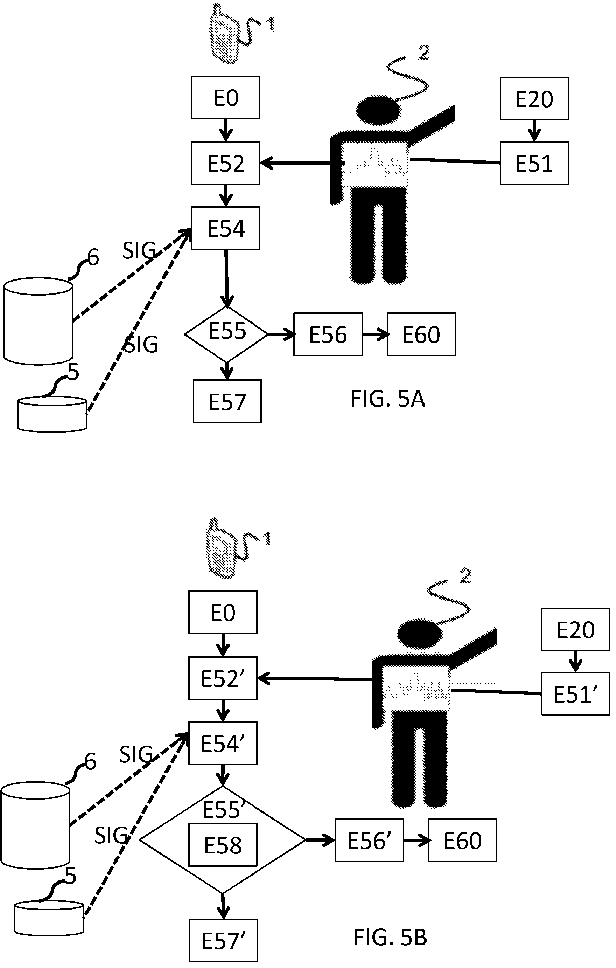

La figure 5A décrit un procédé d'authentification d'un utilisateur selon un mode particulier de réalisation de l'invention. Selon ce mode particulier de réalisation de l'invention, le signal de contrôle à vérifier correspond aux données d'authentification de l'utilisateur qui ont été préalablement apprises.

On suppose ici, de même que précédemment, que tous les prérequis nécessaires à la communication CBB ont été effectuées aux cours des étapes respectives E0 et E20. On suppose aussi que la phase d'apprentissage décrite précédemment à l'appui de la figure 4A ou de la figure 4B a été effectuée et que les données d'authentification de l'utilisateur se trouvent sur le terminal mobile (on rappelle que de telles données pourraient être localisées ailleurs, dans une base de données externe au terminal par exemple).

Lors d'une étape E51, l'utilisateur trace sur une surface du dispositif émetteur, à proximité de l'antenne, une suite de caractères.

Au cours de l'étape E51, la communication s'établit sur le canal CBB. Le dispositif émetteur émet un signal qui est modifié par le tracé de la suite de caractères par l'utilisateur. Le signal modifié transmis via le corps de l'utilisateur et portant les caractéristiques de la suite de caractères tracés par l'utilisateur test est reçu par le terminal de l'utilisateur (1) au cours d'une étape E52. Au cours de l'étape E52, le terminal de l'utilisateur démodule et traite le signal reçu.

La figure 7 représente un exemple de signal reçu représentatif d'une suite de caractères tracés par un utilisateur sur une surface d'un dispositif émetteur, ici les initiales de l'utilisateur.

Lors d'une étape E54, le terminal de l'utilisateur obtient à partir de sa mémoire ou d'une base de données externe des données d'authentification de l'utilisateur, correspondant également selon le mode particulier décrit ici au signal de contrôle à vérifier. Par exemple, il obtient les paramètres du réseau de neurones associé à l'utilisateur.

Lors d'une étape E55, il est vérifié si le signal reçu correspond au signal de contrôle. Pour cela, le signal reçu est fourni en entrée du réseau de neurones qui fournit en sortie une valeur représentative de la correspondance entre le signal reçu et le signal de contrôle ou données d'authentification, par exemple une valeur de probabilité. On rappelle que selon ce mode particulier de réalisation de l'invention, lors de la phase d'apprentissage, le réseau de neurones a appris la correspondance entre le signal reçu et le signal de contrôle (correspondant également selon ce mode de réalisation aux données d'authentification). Suite à l'étape E55, la vérification est positive par exemple si la valeur de correspondance est proche de 100%. Autrement dit, le signal reçu correspond bien à un signal de l'utilisateur. Si un autre utilisateur essaie de tracer la même suite de caractères, la valeur de correspondance sera petite, i.e. éloignée de 100%.

Selon une variante, la vérification est positive lorsque la valeur de correspondance est supérieure à un seuil déterminé, par exemple 95%.

Selon le mode particulier décrit ici, lorsque la phase d'apprentissage a été réalisée selon la variante décrite en relation avec la figure 4B, la valeur de correspondance fournie par le réseau de neurones permet de déterminer si l'utilisateur qui a tracé une suite de caractères est bien l'utilisateur du terminal. Autrement dit, dans cette variante, peu importe la suite de caractères tracés par l'utilisateur pour s'authentifier, il est simplement vérifié que les signaux issus du tracé de cette suite de caractères correspondent bien aux signaux de caractères tracés par l'utilisateur lors de l'apprentissage. On vérifie donc si l'utilisateur qui demande à s'authentifier est bien l'utilisateur pour lequel les données d'authentification ont été apprises. Selon le mode particulier décrit ici, lorsque la phase d'apprentissage a été réalisée selon la variante décrite en relation avec la figure 4A, la valeur de correspondance fournie par le réseau de neurones permet de déterminer si l'utilisateur qui a tracé une suite de caractères est bien l'utilisateur du terminal et si la suite de caractères qu'il a tracé pour s'authentifier est bien la suite de caractères pour laquelle les données d'authentification ont été apprises. Selon cette variante, on vérifie donc l'identité de l'utilisateur et si celui-ci connaît la suite de caractères à tracer pour s'authentifier.

Si la vérification est positive, lors d'une étape E56, l'authentification de l'utilisateur est validée et l'utilisateur peut accéder au service demandé.

Sinon, lors d'une étape E57, l'authentification de l'utilisateur échoue et l'utilisateur ne peut pas accéder au service.

La figure 5B décrit un procédé d'authentification d'un utilisateur selon un autre mode particulier de réalisation de l'invention. Selon cet autre mode particulier de réalisation de l'invention, le signal de contrôle est distinct des données d'authentification de l'utilisateur. L'authentification de l'utilisateur est validée si la suite de caractères tracés par l'utilisateur et après reconnaissance de ces caractères à partir des données d'authentification correspond au signal de contrôle à vérifier.

On suppose ici, de même que précédemment, que tous les prérequis nécessaires à la communication CBB ont été effectuées aux cours des étapes respectives E0 et E20. On suppose aussi que la phase d'apprentissage décrite précédemment à l'appui de la figure 4B a été effectuée et que les données d'authentification de l'utilisateur se trouvent sur le terminal mobile (on rappelle que de telles données pourraient être localisées ailleurs, dans une base de données externe au terminal par exemple).

Lors d'une étape E51', l'utilisateur trace sur une surface du dispositif émetteur, à proximité de l'antenne, une suite de caractères.

Au cours de l'étape E51', la communication s'établit sur le canal IBC. Le dispositif émetteur émet un signal qui est modifié par le tracé de la suite de caractères par l'utilisateur. Le signal modifié transmis via le corps de l'utilisateur et portant les caractéristiques de la suite de caractères tracés par l'utilisateur test reçu par le terminal de l'utilisateur (1) au cours d'une étape E52'.

Lors d'une étape E53', le terminal de l'utilisateur démodule et traite le signal reçu.

Lors d'une étape E54', le terminal de l'utilisateur obtient à partir de sa mémoire ou d'une base de données externe des données d'authentification de l'utilisateur. Par exemple, il obtient les paramètres du réseau de neurones associé à l'utilisateur.

Lors d'une étape E55', il est vérifié si le signal reçu correspond au signal de contrôle permettant l'accès au service demandé. Pour cela, au cours d'une sous-étape E58, la reconnaissance de chaque caractère tracé par l'utilisateur est réalisée à partir du signal reçu et des données d'authentification obtenues. Pour cela, le signal reçu est fourni en entrée du réseau de neurones propres à l'utilisateur et une suite de caractères reconnus est obtenue en sortie, éventuellement avec une valeur de correspondance, correspondant par exemple à une mesure de confiance associée à la suite de caractères reconnus. Lors de l'étape E55', il est ensuite déterminé si la suite de caractères reconnus correspond au signal de contrôle préalablement mémorisé. La vérification est positive par exemple si la suite de caractères reconnus est identique au signal de contrôle.

Si la vérification est positive, lors d'une étape E56', l'authentification de l'utilisateur est validée et l'utilisateur peut accéder au service demandé.

Sinon, lors d'une étape E57', l'authentification de l'utilisateur échoue et l'utilisateur ne peut pas accéder au service.

Les modes particuliers de réalisation ci-dessus ont été décrits dans le cas où le procédé d'authentification est mis en œuvre par le terminal de l'utilisateur.

Dans d'autres mises en œuvre, ces modes de réalisation peuvent être mis en œuvre par le dispositif émetteur. Les mécanismes décrits précédemment sont identiques, les données d'authentification de l'utilisateur et le signal de contrôle sont préalablement mémorisés dans le dispositif émetteur.

Lorsque le terminal de l'utilisateur reçoit le signal représentatif de la suite de caractères tracés par l'utilisateur, ce signal est transmis, par exemple via une liaison WIFI ou Bluetooth, au dispositif émetteur.

Selon l'un quelconque des modes particuliers de réalisation décrit ici, lorsque les données d'authentification de l'utilisateur sont mémorisées dans un ensemble de données d'authentification d'utilisateurs, un identifiant de l'utilisateur, par exemple un numéro de mobile, son nom, ou un autre, est utilisé pour sélectionner les données d'authentification propres à l'utilisateur parmi l'ensemble de données d'authentification d'utilisateurs.

Lorsque le procédé d'authentification est mis en œuvre par le dispositif émetteur, un tel identifiant est par exemple transmis par le terminal utilisateur au dispositif émetteur via un canal WIFI ou Bluethooth.

En variante de l'un quelconque des modes particuliers de réalisation décrits précédemment, lors de la validation de l'authentification, un signal de validation de l'authentification est transmis (E60) à un dispositif de contrôle afin d'activer le service demandé par l'utilisateur. Un tel signal peut être transmis via un canal WIFI ou Bluethooth, ou un réseau IP, etc....

Le dispositif de contrôle précité peut être le dispositif émetteur, ou le terminal de l'utilisateur selon le dispositif mettant en œuvre le procédé d'authentification, ou encore un autre dispositif tel qu'une porte d'accès, un serveur, etc...

## Revendications

1. Système d'authentification d'un utilisateur (2), comprenant au moins une mémoire (M) et un processeur (CPU) configurés pour :
- recevoir un signal représentatif d'un signal radio caractéristique d'au moins un caractère tracé par l'utilisateur (2) sur ou à proximité d'une surface d'un dispositif émetteur (3) comprenant une antenne apte à émettre ledit signal radio à destination d'un terminal (1) de l'utilisateur (2) via un canal utilisant des capacités de conduction d'onde électromagnétique du corps de l'utilisateur (2) lorsque la main de l'utilisateur (2) trace ledit au moins un caractère sur ou à proximité de la surface du dispositif émetteur (3),
- vérifier si le signal reçu correspond à un signal de contrôle préalablement mémorisé, comprenant ledit au moins un caractère tracé par l'utilisateur ;
- lorsque le signal reçu correspond audit signal de contrôle, valider l'authentification de l'utilisateur (2).

2. Système d'authentification d'un utilisateur selon la revendication 1, dans lequel ladite mémoire (M) et ledit processeur (CPU) sont en outre configurés pour générer un signal de validation de l'authentification destiné à un dispositif de contrôle (10) dudit système d'authentification.

3. Système d'authentification d'un utilisateur selon l'une quelconque des revendications 1 et 2, dans lequel ladite mémoire (M) et ledit processeur (CPU) sont compris dans ledit terminal (1).

4. Système d'authentification d'un utilisateur selon l'une quelconque des revendications 1 et 2, dans lequel ladite mémoire (M) et ledit processeur (CPU) sont compris dans ledit dispositif émetteur (3).

5. Système d'authentification d'un utilisateur selon l'une des revendications 3 et 4 combinée à la revendication 2, dans lequel ledit terminal (1), respectivement ledit dispositif émetteur (3), comprend en outre un module de communication pour transmettre ledit signal de validation audit dispositif de contrôle (10).

6. Procédé d'authentification d'un utilisateur (2), mis en œuvre par un processeur, comprenant:
- la réception (E52) d'un signal représentatif d'un signal radio caractéristique d'au moins un caractère tracé par l'utilisateur sur ou à proximité d'une surface d'un dispositif émetteur comprenant une antenne apte à émettre ledit signal radio à destination d'un terminal de l'utilisateur (2) via un canal utilisant des capacités de conduction d'onde électromagnétique du corps de l'utilisateur (2) lorsque la main de l'utilisateur trace ledit au moins un caractère sur ou à proximité de la surface du dispositif émetteur,
- la vérification (E55) si le signal reçu correspond à un signal de contrôle préalablement mémorisé, comprenant ledit au moins un caractère tracé par l'utilisateur ;
- dans le cas d'une vérification positive, la validation (E56) de l'authentification de l'utilisateur.

7. Procédé d'authentification d'un utilisateur selon la revendication 6, dans lequel la vérification comprend l'obtention d'au moins une donnée d'authentification propre à l'utilisateur préalablement mémorisée.

8. Procédé d'authentification d'un utilisateur selon la revendication 7, dans lequel un identifiant de l'utilisateur est utilisé pour sélectionner ladite au moins une donnée d'authentification propre à l'utilisateur parmi un ensemble de données d'authentification d'utilisateurs.

9. Procédé d'authentification d'un utilisateur selon la revendication 7, dans lequel la vérification comprend en outre la reconnaissance de chaque caractère tracé par l'utilisateur à partir de la au moins une donnée d'authentification obtenue, délivrant une suite de caractères reconnus, et la détermination si la suite de caractères reconnus correspond au signal de contrôle préalablement mémorisé.

10. Procédé d'authentification d'un utilisateur selon la revendication 6, dans lequel le signal représentatif d'au moins un caractère tracé par l'utilisateur est reçu par le dispositif émetteur, en provenance du terminal de l'utilisateur.

11. Procédé d'authentification d'un utilisateur selon la revendication 6, dans lequel la validation comprend l'envoi à un dispositif de contrôle d'un signal de validation de l'authentification.

12. Procédé d'authentification d'un utilisateur selon la revendication 7, dans lequel la vérification est mise en œuvre par un réseau de neurones ayant préalablement appris la au moins une donnée d'authentification propre à l'utilisateur.

13. Procédé d'authentification d'un utilisateur selon la revendication 12, dans lequel la vérification fournit une valeur de correspondance entre le signal reçu et le signal de contrôle, la vérification étant positive lorsque la valeur de correspondance est supérieure à un seuil déterminé.

14. Programme d'ordinateur comportant des instructions pour la mise en œuvre du procédé d'authentification selon l'une quelconque des revendications 6 à 13, lorsque le programme est exécuté par un processeur.

15. Support d'enregistrement lisible par un ordinateur, et comportant des instructions d'un programme d'ordinateur selon la revendication 14.

## Patentansprüche

1. System zur Authentifizierung eines Benutzers (2), umfassend mindestens einen Speicher (M) und einen Prozessor (CPU), die dazu ausgestaltet sind:
- ein Signal zu empfangen, das repräsentativ für ein Funksignal ist, das charakteristisch für mindestens ein Zeichen ist, das von dem Benutzer (2) auf oder in der Nähe einer Oberfläche einer sendenden Vorrichtung (3) gezeichnet wird, die eine Antenne umfasst, die geeignet ist, das Funksignal an ein Endgerät (1) des Benutzers (2) über einen Kanal zu senden, der Fähigkeiten zur Leitung einer elektromagnetischen Welle des Körpers des Benutzers (2) verwendet, wenn die Hand des Benutzers (2) das mindestens eine Zeichen auf oder in der Nähe der Oberfläche der sendenden Vorrichtung (3) zeichnet,
- zu überprüfen, ob das empfangene Signal mit einem zuvor gespeicherten Prüfsignal übereinstimmt, welches das mindestens eine von dem Benutzer gezeichnete Zeichen umfasst;
- wenn das empfangene Signal mit dem Prüfsignal übereinstimmt, die Authentifizierung des Benutzers (2) zu validieren.

2. System zur Authentifizierung eines Benutzers nach Anspruch 1, wobei der Speicher (M) und der Prozessor (CPU) ferner dazu ausgestaltet sind, ein Signal zur Validierung der Authentifizierung zu erzeugen, das für eine Prüfvorrichtung (10) des Systems zur Authentifizierung bestimmt ist.

3. System zur Authentifizierung eines Benutzers nach einem der Ansprüche 1 und 2, wobei der Speicher (M) und der Prozessor (CPU) in dem Endgerät (1) enthalten sind.

4. System zur Authentifizierung eines Benutzers nach einem der Ansprüche 1 und 2, wobei der Speicher (M) und der Prozessor (CPU) in der sendenden Vorrichtung (3) enthalten sind.

5. System zur Authentifizierung eines Benutzers nach einem der Ansprüche 3 und 4 in Verbindung mit Anspruch 2, wobei das Endgerät (1) beziehungsweise die sendende Vorrichtung (3) ferner ein Kommunikationsmodul umfasst, um das Validierungssignal an die Prüfvorrichtung (10) zu übertragen.

6. Verfahren zur Authentifizierung eines Benutzers (2), das von einem Prozessor ausgeführt wird, umfassend:
- das Empfangen (E52) eines Signals, das repräsentativ für ein Funksignal ist, das charakteristisch für mindestens ein Zeichen ist, das von dem Benutzer auf oder in der Nähe einer Oberfläche einer sendenden Vorrichtung gezeichnet wird, die eine Antenne umfasst, die geeignet ist, das Funksignal an ein Endgerät des Benutzers (2) über einen Kanal zu senden, der Fähigkeiten zur Leitung einer elektromagnetischen Welle des Körpers des Benutzers (2) verwendet, wenn die Hand des Benutzers das mindestens eine Zeichen auf oder in der Nähe der Oberfläche der sendenden Vorrichtung zeichnet,
- das Überprüfen (E55), ob das empfangene Signal mit einem zuvor gespeicherten Prüfsignal übereinstimmt, welches das mindestens eine von dem Benutzer gezeichnete Zeichen umfasst;
- im Fall einer positiven Überprüfung, das Validieren (E56) der Authentifizierung des Benutzers.

7. Verfahren zur Authentifizierung eines Benutzers nach Anspruch 6, wobei das Überprüfen das Erhalten mindestens eines zuvor gespeicherten benutzerspezifischen Authentifizierungsdatenelements umfasst.

8. Verfahren zur Authentifizierung eines Benutzers nach Anspruch 7, wobei eine Kennung des Benutzers verwendet wird, um das mindestens eine benutzerspezifische Authentifizierungsdatenelement aus einer Menge von Benutzerauthentifizierungsdatenelementen auszuwählen.

9. Verfahren zur Authentifizierung eines Benutzers nach Anspruch 7, wobei das Überprüfen ferner das Erkennen jedes von dem Benutzer gezeichneten Zeichens ausgehend von dem mindestens einen erhaltenen Authentifizierungsdatenelement umfasst, wobei eine Folge erkannter Zeichen ausgegeben wird, und das Bestimmen, ob die Folge erkannter Zeichen mit dem zuvor gespeicherten Prüfsignal übereinstimmt.

10. Verfahren zur Authentifizierung eines Benutzers nach Anspruch 6, wobei das Signal, das für mindestens ein von dem Benutzer gezeichnetes Zeichen repräsentativ ist, durch die sendende Vorrichtung von dem Endgerät des Benutzers empfangen wird.

11. Verfahren zur Authentifizierung eines Benutzers nach Anspruch 6, wobei das Validieren das Senden eines Signals zur Validierung der Authentifizierung an eine Prüfvorrichtung umfasst.

12. Verfahren zur Authentifizierung eines Benutzers nach Anspruch 7, wobei das Überprüfen durch ein neuronales Netz ausgeführt wird, das zuvor das mindestens eine benutzerspezifische Authentifizierungsdatenelement gelernt hat.

13. Verfahren zur Authentifizierung eines Benutzers nach Anspruch 12, wobei das Überprüfen einen Übereinstimmungswert zwischen dem empfangenen Signal und dem Prüfsignal ergibt, wobei die Überprüfung positiv ist, wenn der Übereinstimmungswert größer als ein bestimmter Schwellenwert ist.

14. Computerprogramm, das Anweisungen beinhaltet, die bei der Ausführung des Programms durch einen Prozessor das Verfahren zur Authentifizierung nach einem der Ansprüche 6 bis 13 ausführen.

15. Aufzeichnungsmedium, das von einem Computer gelesen werden kann und Anweisungen eines Computerprogramms nach Anspruch 14 beinhaltet.

## Claims

1. System for authenticating a user (2), comprising at least one memory (M) and a processor (CPU) which are configured for:
- receiving a signal representative of a radio signal characteristic of at least one character traced by the user (2) on or near a surface of a transmitting device (3) comprising an antenna capable of transmitting said radio signal to a terminal (1) of the user (2) via a channel using electromagnetic wave conduction capabilities of the body of the user (2) when the hand of the user (2) traces said at least one character on or near the surface of the transmitting device (3),
- verifying whether the signal received corresponds to a previously stored control signal, comprising said at least one character traced by the user;
- when the signal received corresponds to said control signal, validating the authentication of the user (2).

2. System for authenticating a user according to Claim **1,** wherein said memory (M) and said processor (CPU) are further configured to generate an authentication validation signal intended for a control device (10) of said authentication system.

3. System for authenticating a user according to either of Claims 1 and 2, wherein said memory (M) and said processor (CPU) are comprised in said terminal (1).

4. System for authenticating a user according to either of Claims 1 and 2, wherein said memory (M) and said processor (CPU) are comprised in said transmitting device (3).

5. System for authenticating a user according to either of Claims 3 and 4 combined with Claim 2, wherein said terminal (1), respectively said transmitting device (3), further comprises a communication module for transmitting said validation signal to said control device (10).

6. Method for authenticating a user (2), implemented by a processor, comprising:
- receiving (E52) a signal representative of a radio signal characteristic of at least one character traced by the user on or near a surface of a transmitting device comprising an antenna capable of transmitting said radio signal to a terminal of the user (2) via a channel using electromagnetic wave conduction capabilities of the body of the user (2) when the hand of the user traces said at least one character on or near the surface of the transmitting device,
- verifying (E55) whether the signal received corresponds to a previously stored control signal, comprising said at least one character traced by the user;
- in the case of a positive verification, validating (E56) the authentication of the user.

7. Method for authenticating a user according to Claim 6, wherein the verification comprises obtaining at least one previously stored item of authentication data specific to the user.

8. Method for authenticating a user according to Claim 7, wherein an identifier of the user is used to select said at least one item of authentication data specific to the user from a set of user authentication data.

9. Method for authenticating a user according to Claim 7, wherein the verification further comprises recognizing each character traced by the user on the basis of the at least one item of authentication data obtained, delivering a series of recognized characters, and determining whether the series of recognized characters corresponds to the previously stored control signal.

10. Method for authenticating a user according to Claim 6, wherein the signal representative of at least one character traced by the user is received by the transmitting device, from the terminal of the user.

11. Method for authenticating a user according to Claim 6, wherein the validation comprises sending an authentication validation signal to a control device.

12. Method for authenticating a user according to Claim 7, wherein the verification is implemented by a neural network having previously learned the at least one item of authentication data specific to the user.

13. Method for authenticating a user according to Claim 12, wherein the verification provides a value of correspondence between the received signal and the control signal, the verification being positive when the value of correspondence is higher than a determined threshold.

14. Computer program comprising instructions for implementing the authentication method according to any one of Claims 6 to 13, when the program is executed by a processor.

15. Computer-readable recording medium, comprising instructions for a computer program according to Claim 14.
